# EUROPÄISCHE PATENTSCHRIFT

(11) **EP 3 850 237 B1**
(45) Veröffentlichungstag und Bekanntmachung des Hinweises auf die Patenterteilung: **22.03.2023**
(21) Anmeldenummer: 19765160.7
(22) Anmeldetag: 23.08.2019
(51) Int. Cl.: F16D 13/68

(54) **HYBRIDMODUL FÜR EINEN ANTRIEBSSTRANG EINES KRAFTFAHRZEUGS**
HYBRID MODULE FOR A DRIVETRAIN OF A MOTOR VEHICLE
MODULE HYBRIDE POUR UNE CHAÎNE CINÉMATIQUE D'UN VÉHICULE À MOTEUR

(30) Priorität: 11.09.2018 DE 102018122075
(43) Veröffentlichungstag der Anmeldung: 21.07.2021
(73) Patentinhaber: Schaeffler Technologies AG & Co. KG, 91074 Herzogenaurach (DE)
(72) Erfinder: MEINHARD, Rolf, 77815 Bühl (DE)
(86) Internationale Anmeldenummer: PCT/DE2019/100762
(87) Internationale Veröffentlichungsnummer: WO 2020/052707

(56) Entgegenhaltungen:
- DE-A1-102008 006 155
- DE-A1-102015 215 794
- DE-A1-102016 014 672

## Beschreibung

Die vorliegende Erfindung betrifft ein Hybridmodul für einen Antriebsstrang eines Kraftfahrzeugs. Reibkupplungen dienen in Antriebssträngen von Kraftfahrzeugen, wie beispielsweise Personenkraftwagen, Lastkraftwagen oder Krafträdern, dem Ausgleich einer Antriebsdrehzahl und einer Getriebedrehzahl insbesondere während Anfahrvorgängen des Kraftfahrzeugs.

Mittels eines Hybridmoduls ist ein Drehmoment eines (zusätzlichen) Elektromotors zum Antreiben des Kraftfahrzeugs auf einen (konventionellen) Antriebsstrang des Kraftfahrzeugs übertragbar. Solche Hybridmodule können eine Reibkupplung umfassen, durch die ein Verbrennungsmotor von dem Antriebsstrang trennbar ist. Beim Einkuppeln der Reibkupplung steht eine Verzahnung zwischen Reiblamellen und einem Lamellenträger der Reibkupplung entsprechend des übertragenen Drehmoments unter einer Tangentiallast. Aus dieser Tangentiallast resultiert eine Gegenkraft gegen eine Anpresskraft einer Federeinrichtung zum reibschlüssigen Schließen der Reibkupplung, wodurch die Anpresskraft reduziert wird. Hierdurch kann das tatsächlich übertragbare Drehmoment bis auf 50 % eines Nenn-Drehmomentes der Reibkupplung reduziert sein.

Aus der DE 10 2008 006 115 A1 ist eine Reibkupplung bekannt, die zwischen einer Offenstellung und Schließstellung schaltbar ist und zumindest eine mit einem Innenlamellenträger eines Eingangsteils verdrehfest verbundene Innenlamelle und zumindest eine mit einem Außenlamellenträger eines Ausgangsteils verdrehfest verbundene Außenlamelle aufweist, wobei an dem Innenlamellenträger die Innenlamelle befestigt ist, wobei an dem Außenlamellenträger die Außenlamelle über eine Mehrzahl von Befestigungsabschnitte befestigt ist und wobei eine elastische Beweglichkeit der Mehrzahl von Befestigungsabschnitte in einer axialen Richtung erhöht ist.

Aufgabe der Erfindung ist es, die mit Bezug auf den Stand der Technik geschilderten Probleme zumindest teilweise zu lösen und insbesondere ein Hybridmodul für einen Antriebsstrang eines Kraftfahrzeugs anzugeben, durch das in jeder Betriebssituation hohe Drehmomente übertragbar sind.

Diese Aufgabe wird gelöst mit einem Hybridmodul gemäß den Merkmalen des unabhängigen Anspruchs. Weitere vorteilhafte Ausgestaltungen des Hybridmoduls sind in den abhängigen Ansprüchen angegeben. Es ist darauf hinzuweisen, dass die in den abhängigen Ansprüchen einzeln aufgeführten Merkmale in beliebiger technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Hierzu trägt ein Hybridmodul für einen Antriebsstrang eines Kraftfahrzeugs bei, das zumindest die folgenden Komponenten aufweist:
- ein Eingangsteil mit einem um eine Drehachse drehbaren Innenlamellenträger, wobei an dem Innenlamellenträger zumindest eine Innenlamelle befestigt ist;
- ein Ausgangsteil mit einem Außenlamellenträger, wobei an dem Außenlamellenträger zumindest eine Außenlamelle über eine Mehrzahl von Befestigungsabschnitten befestigt ist und wobei eine elastische Beweglichkeit der Mehrzahl von Befestigungsabschnitten in einer axialen Richtung erhöht ist; und
- zumindest eine Federeinrichtung, mit der die zumindest eine Außenlamelle und die zumindest eine Innenlamelle zum Schließen der Reibkupplung mit einer Anpresskraft verspannbar sind.

Das vorgeschlagene Hybridmodul ist für einen Antriebsstrang eines Kraftfahrzeugs, beispielsweise eines Personenkraftwagens, Lastkraftwagens und/oder Kraftrads, vorgesehen. Solche Kraftfahrzeuge weisen regelmäßig zumindest einen Antriebsmotor zum Antreiben des Kraftfahrzeugs auf. Bei dem zumindest einen Antriebsmotor kann es sich insbesondere um einen Verbrennungsmotor oder auch zumindest einen (zusätzlichen) Elektromotor zum Antrieb des Kraftfahrzeugs handeln.

Das Hybridmodul umfasst ein um eine Drehachse mittels des Antriebsmotors verdrehbar angeordnetes, antriebsseitiges Eingangsteil, das direkt oder indirekt beispielsweise mit einer Kurbelwelle des Antriebsmotors bzw. des Verbrennungsmotors eines Hybridantriebs verbindbar ist. Weiterhin umfasst das Hybridmodul ein gegenüber dem Eingangsteil koaxial und um die Drehachse verdrehbar angeordnetes Ausgangsteil, das beispielsweise mit einer Getriebeeingangswelle eines Getriebes indirekt oder direkt verbindbar ist. Das Getriebe kann beispielsweise als Automatikgetriebe oder als ein von einem Fahrer manuell geschaltetes Schaltgetriebe ausgebildet sein.

Zwischen dem Eingangsteil und dem Ausgangsteil ist eine in eine Umfangsrichtung um die Drehachse wirksame, zwischen einer Offenstellung und Schließstellung schaltbare Reibkupplung vorgesehen. Die Reibkupplung umfasst zumindest eine mit einem Innenlamellenträger des Eingangsteils verdrehfest verbundene Innenlamelle und zumindest eine mit einem Außenlamellenträger des Ausgangsteils verdrehfest verbundene Außenlamelle. Die zumindest eine Außenlamelle kann über eine Verzahnung mit dem Außenlamellenträger und/oder die zumindest eine Innenlamelle über eine Verzahnung mit dem Innenlamellenträger verbunden sein. Die Verzahnung der zumindest einen Außenlamelle mit dem Außenlamellenträger ist über eine Mehrzahl von Befestigungsabschnitten der zumindest einen Außenlamelle gebildet. Die Mehrzahl von Befestigungsabschnitten sind insbesondere einstückig mit der Außenlamelle ausgebildet, beispielsweise durch einen (gemeinsamen) Stanzvorgang. Die Außenlamelle ist insbesondere (im Wesentlichen) ringförmig ausgebildet und/oder zumindest teilweise aus Stahl gefertigt. Eine elastische Beweglichkeit der Mehrzahl von Befestigungsabschnitten in einer axialen Richtung ist erhöht. Hierzu kann das Material der Mehrzahl von Befestigungsabschnitten beispielsweise mit einer geringeren Härte, einer geringeren Dicke und/oder einer geringeren Material-Festigkeit ausgebildet sein als das Material der übrigen Außenlamellen. Hierdurch kann die bei der Betätigung der Reibkupplung in der Verzahnung zwischen der Außenlamelle und dem Außenlamellenträger entstehende Verschiebereibung zumindest teilweise kompensiert werden, sodass eine geringere Gegenkraft gegen eine Anpresskraft der Reibkupplung erzeugt wird. Somit können mit dem Hybridmodul höhere Drehmomente übertragen werden. Der Innenlamellenträger ist insbesondere ringförmig ausgebildet und/oder zumindest teilweise aus Stahl gefertigt. Die zumindest eine Außenlamelle und die zumindest eine Innenlamelle sind zum Schließen der Reibkupplung durch eine Anpresskraft zumindest einer Federeinrichtung verspannbar bzw. in Reibeingriff bringbar. Insbesondere sind die zumindest eine Außenlamelle und die zumindest eine Innenlamelle in einer axialen Richtung (parallel zu der Drehachse) verspannbar. Bei der zumindest einen Federeinrichtung handelt es sich insbesondere um eine Tellerfeder. Die Reibkupplung ist durch die zumindest eine Federeinrichtung insbesondere normal-eingerückt. Klarzustellen ist weiterhin, dass auch die Innenlamellen eine Mehrzahl von Befestigungsabschnitten aufweisen können, mit denen diese an dem Innenlamellenträger befestigt sind. Die Mehrzahl von Befestigungsabschnitten der Innenlamellen sind radial innen angeordnet, können aber ansonsten identisch zu der Mehrzahl von Befestigungsabschnitten der Außenlamellen ausgebildet sein, sodass eine elastische Beweglichkeit der Mehrzahl von Befestigungsabschnitten der Innenlamellen ebenfalls in der axialen Richtung erhöht ist.

Das Ausgangsteil kann zudem durch einen Elektromotor des Hybridantriebs antreibbar sein. Der Elektromotor kann beispielsweise mit einer Betriebsspannung von 24 V (Volt) oder 48 V betreibbar sein. Bei dem Elektromotor kann es sich auch um eine Hochvolt-Elektromaschine handeln, die mit einer Betriebsspannung von bis zu (circa) 400 V (Volt) betreibbar ist. Der Elektromotor kann koaxial zu dem Hybridmodul bzw. zu der Drehachse des Hybridmoduls angeordnet sein, sodass ein Rotor des Elektromotors die Reibkupplung umgibt. Weiterhin kann der Elektromotor parallel zu der Drehachse des Hybridmoduls angeordnet sein. Bei dieser achsparallelen Anordnung des Elektromotors kann dieser über einen Riemen und eine Riemenscheibe mit dem Ausgangsteil verbunden sein.

Der Außenlamellenträger kann mit einem Rotor des Elektromotors verbunden sein. Der Außenlamellenträger kann einteilig mit einem Rotor des Elektromotors verbunden sein. Der Außenlamellenträger kann mit einer Riemenscheibe verbunden oder einteilig mit der Riemenscheibe ausgebildet sein. Insbesondere kann bei einer achsparallelen Anordnung des Elektromotors ein Drehmoment von dem Elektromotor über einen Riemen auf die Riemenscheibe und damit auf das Ausgangsteil bzw. den Außenlamellenträger übertragbar sein. Alternativ kann der Außenlamellenträger auch mit dem Antriebsmotor bzw. Verbrennungsmotor verbunden und/oder der Innenlamellenträger mit dem Elektromotor bzw. einem Abtrieb ((Schalt-)Getriebe), verbunden sein.

Eine Dicke der Mehrzahl von Befestigungsabschnitte kann gegenüber einer Außenlamellendicke zumindest teilweise reduziert sein. Die Dicke der Mehrzahl von Befestigungsabschnitten ist gegenüber der Außenlamellendicke insbesondere in der axialen Richtung, d. h. parallel zu der Drehachse, reduziert. Hierdurch kann die elastische Beweglichkeit der Mehrzahl von Befestigungsabschnitten ebenfalls erhöht werden. Zudem kann die Dicke der Mehrzahl von Befestigungsabschnitten in Bereichen, mit denen die Mehrzahl von Befestigungsabschnitten in den Außenlamellenträger eingreifen nicht reduziert sein, also beispielsweise eine zur übrigen Außenlamelle identische Dicke aufweisen.

Die Dicke der Mehrzahl von Befestigungsabschnitte in kann (zumindest teilweise) 50 % der Außenlamellendicke entsprechen.

Die Dicke der Mehrzahl von Befestigungsabschnitte kann (zumindest teilweise) 0,8 mm (Millimeter) bis 1 mm betragen. Die übrige Außenlamellendicke kann beispielsweise (circa) 2 mm betragen.

Die Mehrzahl von Befestigungsabschnitte kann eine Prägung aufweisen. Bei der Prägung handelt es sich insbesondere um eine bereichsweise Reduzierung der Dicke (in der axialen Richtung) der Mehrzahl von Befestigungsabschnitten.

Die Mehrzahl von Befestigungsabschnitte kann einen tangentialen Abschnitt und einen radialen Abschnitt aufweisen. Der tangentiale Abschnitt erstreckt sich bevorzugt von einer (radial äußeren) Umfangsfläche der Außenlamelle zumindest teilweise in eine Umfangsrichtung und geht bevorzugt über eine Biegung in den radialen Abschnitt über.

Der radiale Abschnitt kann in einen Schlitz des Außenlamellenträgers eingreifen. Hierdurch kann die Verzahnung zwischen der Außenlamelle und dem Außenlamellenträger gebildet werden, durch die die Außenlamelle und Außenlamellenträger verdrehfest miteinander verbindbar sind. Der Außenlamellenträger beweist je Befestigungsabschnitt insbesondere einen Schlitz auf. Der Schlitz erstreckt sich bevorzugt in die axiale Richtung.

Die Länge einer Zentrumsachse der Mehrzahl von Befestigungsabschnitte kann größer sein als eine radiale Länge der Mehrzahl von Befestigungsabschnitten. Mit anderen Worten können die Befestigungsabschnitte entlang ihrer Längsachse eine größere Länge aufweisen als diese in der radialen Länge aus der Umfangsfläche der Außenlamelle hervorstehen. Die radiale Länge der Befestigungsabschnitte bemisst sich dabei insbesondere ausgehend von der Umfangsfläche der Außenlamelle in die radiale Richtung.

Die Mehrzahl von Befestigungsabschnitten kann in eine Umfangsrichtung orientiert sein.

Zudem können alle Befestigungsabschnitte in die gleiche Umfangsrichtung orientiert sein.

Die Erfindung sowie das technische Umfeld werden nachfolgend anhand der Figuren näher erläutert. Es ist darauf hinzuweisen, dass die Figuren eine besonders bevorzugte Variante der Erfindung zeigen, diese jedoch nicht darauf beschränkt sind. Dabei sind gleiche Bauteile in den Figuren mit denselben Bezugszeichen versehen. Es zeigen beispielhaft und schematisch:
- Fig. 1:: ein Hybridmodul im Längsschnitt; und
- Fig. 2:: eine Außenlamelle des Hybridmoduls in einer Draufsicht.

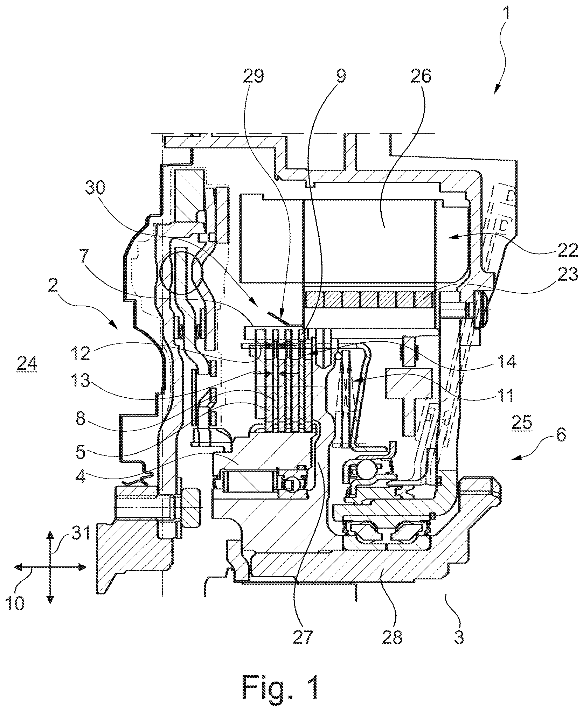

Die Fig. 1 zeigt ein Hybridmodul 1 im Längsschnitt. Das Hybridmodul 1 weist ein auf einer Motorseite 24 angeordnetes Eingangsteil 2 und ein auf einer Getriebeseite 25 angeordnetes Ausgangsteil 6 auf. Das Eingangsteil 2 umfasst einen um eine Drehachse 3 durch einen hier nicht gezeigten Antriebsmotor bzw. Verbrennungsmotor drehbaren Innenlamellenträger 4, an dem vier Innenlamellen 5 verdrehfest über eine hier nicht gezeigte Verzahnung befestigt sind. Das Ausgangsteil 6 umfasst einen koaxial zu dem Innenlamellenträger 4 angeordneten und ebenfalls um die Drehachse 3 drehbaren Außenlamellenträger 7 auf, an dem drei Außenlamellen 8 verdrehfest über eine radial äußere Verzahnung 29 befestigt sind. Hierzu weisen die Außenlamellen 8 eine Vielzahl von Befestigungsabschnitte 9 auf, die in einer radialen Richtung 31 in den Außenlamellenträger 7 eingreifen. Eine Dicke 12 der Befestigungsabschnitte in einer axialen Richtung 10 (parallel zu der Drehachse 3 und orthogonal zu der radialen Richtung 31) ist gegenüber einer Außenlamellendicke 13 reduziert. In diesem Bereich weisen die Befestigungsabschnitte 9 eine Prägung 14 auf. Hierdurch ist eine elastische Beweglichkeit der Befestigungsabschnitte 9 der Außenlamellen 8 gegenüber der übrigen Außenlamelle 8 erhöht.

Der Außenlamellenträger 7 ist mit einem Rotor 23 eines koaxial zu dem Hybridmodul 1 angeordneten Elektromotors 22 verbunden. Der Elektromotor 22 weist zudem einen Stator 26 auf. Der Außenlamellenträger 7 ist durch den Elektromotor 22 antreibbar. Die Außenlamellen 8 und die Innenlamellen 5 sind Teil einer Reibkupplung 30. Die Außenlamellen 8 und die Innenlamellen 5 sind durch eine Federeinrichtung 11, bei der es sich hier um eine Tellerfeder handelt, zum Schließen der Reibkupplung 30 verspannbar. Bei geschlossener Reibkupplung 30 ist über den Innenlamellenträger 4, die Innenlamellen 5, die Außenlamellen 8, den Außenlamellenträger 7 und einen Außenlamellenträgerflansch 27 ein Drehmoment auf eine Ausgangswelle 28 übertragbar. Die Ausgangswelle 28 ist, insbesondere über eine hier nicht gezeigte weitere Reibkupplung, mit einer Getriebeeingangswelle eines hier ebenfalls nicht gezeigten Getriebes verbindbar.

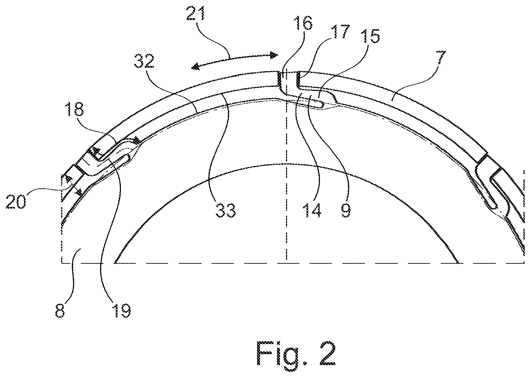

Die Fig. 2 zeigt eine Außenlamelle 8 in einer Draufsicht, d. h. in der in der Fig. 1 gezeigten axialen Richtung 10. Zu erkennen sind hier insbesondere die an einer radialen Umfangsfläche 32 ausgebildeten Befestigungsabschnitte 9 der Außenlamelle 8. Die Befestigungsabschnitte weisen einen tangentialen Abschnitt 15 und einen radialen Abschnitt 16 auf. Der tangentiale Abschnitt 15 erstreckt sich von der Umfangsfläche 32 zumindest teilweise in eine Umfangsrichtung 21 und geht dann über eine Biegung in den radialen Abschnitt 16 über. Der tangentiale Abschnitt 15 erstreckt sich zudem von der Umfangsfläche 32 zu einer Innenfläche 33 des Außenlamellenträgers 7. Die Prägung 14 der Befestigungsabschnitte 9 kann insbesondere (nur) zwischen der Umfangsfläche 32 und der Innenfläche 33 ausgebildet sein. Der radiale Abschnitt 16 greift in einen Schlitz 17 des Außenlamellenträgers 7 ein, sodass die Außenlamelle 6 in der Umfangsrichtung 21 verdrehfest mit dem Außenlamellenträger 7 verbunden ist. Eine Länge 18 einer Zentrumsachse 19 der Befestigungsabschnitte 9 ist größer als eine radiale Länge 20 der Befestigungsabschnitte 9.
- 32: Umfangsfläche
- 33: Innenfläche

## Patentansprüche

1. Hybridmodul (1) für einen Antriebsstrang eines Kraftfahrzeugs, mit einem Eingangsteil (2), einem Ausgangsteil (6) und einer dazwischen angeordneten, in Umfangsrichtung um eine Drehachse wirksamen, Reibkupplung (30), die zwischen einer Offenstellung und Schließstellung schaltbar ist und zumindest eine mit einem Innenlamellenträger (4) des Eingangsteils (2) verdrehfest verbundene Innenlamelle (5) und zumindest eine mit einem Außenlamellenträger (7) des Ausgangsteils (6) verdrehfest verbundene Außenlamelle (8) aufweist, wobei an dem Innenlamellenträger (4) die Innenlamelle (5) befestigt ist, wobei an dem Außenlamellenträger (7) die Außenlamelle (8) über eine Mehrzahl von Befestigungsabschnitte (9) befestigt ist und eine elastische Beweglichkeit der Mehrzahl von Befestigungsabschnitte (9) in einer axialen Richtung (10) erhöht ist,
**dadurch gekennzeichnet, dass** die Reibkupplung normal-eingerückt ist und
dadurch, dass zumindest eine Federeinrichtung (11) vorgesehen ist, mit der die zumindest eine Außenlamelle (8) und die zumindest eine Innenlamelle (5) zur Ausbildung einer reibschlüssigen Verbindung zwischen der zumindest einen Außenlamelle (8) und der zumindest einen Innenlamelle (5) mit einer Anpresskraft verspannbar sind, um die Reibkupplung (30) normaleinzurücken.

2. Hybridmodul (1) nach Anspruch 1, wobei eine Dicke (12) der Mehrzahl von Befestigungsabschnitte gegenüber einer Außenlamellendicke (13) zumindest teilweise reduziert ist.

3. Hybridmodul (1) nach Anspruch 2, wobei die Dicke (12) der Mehrzahl von Befestigungsabschnitte 50 % der Außenlamellendicke (13) entspricht.

4. Hybridmodul (1) nach Anspruch 2 oder 3, wobei die Dicke (12) der Mehrzahl von Befestigungsabschnitte 0,8 mm bis 1 mm beträgt.

5. Hybridmodul (1) nach einem der vorhergehenden Ansprüche, wobei die Mehrzahl von Befestigungsabschnitte eine Prägung (14) aufweisen.

6. Hybridmodul (1) nach einem der vorhergehenden Ansprüche, wobei die Mehrzahl von Befestigungsabschnitte (9) einen tangentialen Abschnitt (15) und einen radialen Abschnitt (16) aufweisen.

7. Hybridmodul (1) nach Anspruch 6, wobei der radiale Abschnitt (13) in einen Schlitz (17) des Außenlamellenträgers (7) eingreift.

8. Hybridmodul (1) nach einem der vorhergehenden Ansprüche, wobei eine Länge (18) einer Zentrumsachse (19) der Mehrzahl von Befestigungsabschnitte (9) größer ist als eine radiale Länge (20) der Mehrzahl von Befestigungsabschnitte (9).

9. Hybridmodul (1) nach einem der vorhergehenden Ansprüche, wobei die Mehrzahl von Befestigungsabschnitte (9) in eine Umfangsrichtung (21) orientiert sind.

10. Hybridmodul (1) nach Anspruch 9, wobei alle Befestigungsabschnitte (9) in die gleiche Umfangsrichtung (21) orientiert sind.

## Claims

1. A hybrid module (1) for a drivetrain of a motor vehicle, having an input part (2), an output part (6) and a friction clutch (30) arranged therebetween and acting in the circumferential direction about an axis of rotation, which friction clutch can be shifted between an open position and a closed position and has at least one inner plate (5) connected to an inner plate carrier (4) of the input part (2) in a manner fixed against rotation and at least one outer plate (8) connected to an outer plate carrier (7) of the output part (6) in a manner fixed against rotation, wherein the inner plate (5) is fastened on the inner plate carrier (4), wherein the outer plate (8) is fastened to the outer plate carrier (7) via a plurality of fastening portions (9) and an elastic flexibility of the plurality of fastening portions (9) is increased in the axial direction (10), **characterised in that** the friction clutch is normally engaged and **in that** at least one spring device (11) is provided with which the at least one outer plate (8) and the at least one inner plate (5) can be clamped together with a pressing force to form a friction connection between the at least one outer plate (8) and the at least one inner plate (5) in order to normally engage the friction clutch (30).

2. The hybrid module (1) according to claim 1, wherein a thickness (12) of the plurality of fastening portions is at least partially reduced relative to an outer plate thickness (13).

3. The hybrid module (1) according to claim 2, wherein the thickness (12) of the plurality of fastening portions corresponds to 50% of the outer plate thickness (13).

4. The hybrid module (1) according to claim 2 or 3, wherein the thickness (12) of the plurality of fastening portions is 0.8 mm to 1 mm.

5. The hybrid module (1) according to one of the preceding claims, wherein the plurality of fastening portions has an embossing (14).

6. The hybrid module (1) according to one of the preceding claims, wherein the plurality of fastening portions (9) has a tangential portion (15) and a radial portion (16).

7. The hybrid module (1) according to claim 6, wherein the radial portion (13) engages in a slot (17) of the outer plate carrier (7).

8. The hybrid module (1) according to one of the preceding claims, wherein a length (18) of a central axis (19) of the plurality of fastening portions (9) is greater than a radial length (20) of the plurality of fastening portions (9).

9. The hybrid module (1) according to one of the preceding claims, wherein the plurality of fastening portions (9) is oriented in a circumferential direction (21).

10. The hybrid module (1) according to claim 9, wherein all fastening portions (9) are oriented in the same circumferential direction (21).

## Revendications

1. Module hybride (1) pour une chaîne cinématique d'un véhicule à moteur, comprenant une pièce d'entrée (2), une pièce de sortie (6) et un embrayage à friction (30) disposé entre elles et agissant dans la direction circonférentielle autour d'un axe de rotation, qui peut être basculé entre une position ouverte et une position fermée et qui présente au moins une lamelle intérieure (5) reliée de manière solidaire en rotation à un support de lamelle intérieure (4) de la pièce d'entrée (2) et au moins une lamelle extérieure (8) reliée de manière solidaire en rotation à un support de lamelle extérieure (7) de la pièce de sortie (6), la lamelle intérieure (5) étant fixée sur le support de lamelle intérieure (4), la lamelle extérieure (8) étant fixée au support de lamelle extérieure (7) par l'intermédiaire d'une pluralité de parties de fixation (9) et une mobilité élastique de la pluralité de parties de fixation (9) étant augmentée dans une direction axiale (10), **caractérisé en ce que** l'embrayage à friction est enclenché normalement et **en ce qu'**est prévu au moins un dispositif à ressort (11) avec lequel l'au moins une lamelle extérieure (8) et l'au moins une lamelle intérieure (5) peuvent être serrées avec une force de pression pour former une liaison par friction entre l'au moins une lamelle extérieure (8) et l'au moins une lamelle intérieure (5), afin d'enclencher normalement l'embrayage à friction (30).

2. Module hybride (1) selon la revendication 1, dans lequel une épaisseur (12) de la pluralité de parties de fixation est au moins partiellement réduite par rapport à une épaisseur de lamelle extérieure (13).

3. Module hybride (1) selon la revendication 2, dans lequel l'épaisseur (12) de la pluralité de parties de fixation correspond à 50 % de l'épaisseur de la lamelle extérieure (13).

4. Module hybride (1) selon la revendication 2 ou 3, dans lequel l'épaisseur (12) de la pluralité de parties de fixation est comprise entre 0,8 mm et 1 mm.

5. Module hybride (1) selon l'une quelconque des revendications précédentes, dans lequel la pluralité de parties de fixation comporte un gaufrage (14).

6. Module hybride (1) selon l'une quelconque des revendications précédentes, dans lequel la pluralité de parties de fixation (9) présente une partie tangentielle (15) et une partie radiale (16).

7. Module hybride (1) selon la revendication 6, dans lequel la partie radiale (13) s'engage dans une fente (17) du support de lamelle extérieure (7).

8. Module hybride (1) selon l'une quelconque des revendications précédentes, dans lequel une longueur (18) d'un axe central (19) de la pluralité de parties de fixation (9) est supérieure à une longueur radiale (20) de la pluralité de parties de fixation (9).

9. Module hybride (1) selon l'une quelconque des revendications précédentes, dans lequel la pluralité de parties de fixation (9) est orientée dans une direction circonférentielle (21).

10. Module hybride (1) selon la revendication 9, dans lequel toutes les parties de fixation (9) sont orientées dans la même direction circonférentielle (21).
